# EUROPEAN PATENT SPECIFICATION

(11) **EP 3 810 892 B1**
(45) Date of publication and mention of the grant of the patent: **23.03.2022**
(21) Application number: 19734029.2
(22) Date of filing: 24.06.2019
(51) Int. Cl.: E21B 43/01, E21B 43/017, E21B 41/00

(54) **SUBSEA COMPRESSION SYSTEM AND METHOD**
UNTERWASSERKOMPRESSIONSSYSTEM UND -VERFAHREN
SYSTÈME ET PROCÉDÉ DE COMPRESSION SOUS-MARIN

(30) Priority: 25.06.2018 NO 20180897
(43) Date of publication of application: 28.04.2021
(73) Proprietor: FMC Kongsberg Subsea AS, 3601 Kongsberg (NO)
(72) Inventor: TØNNESSEN, Leif Arne, 1354 Bærums Verk (NO); HASSEL, Jan Helge, 3440 Røyken (NO); ROMANELLO, Paolo, 1386 Asker (NO)
(74) Representative: Onsagers AS
(86) International application number: PCT/EP2019/066643
(87) International publication number: WO 2020/002215

(56) References cited:
- WO-A1-2010/144187
- US-A1- 2012 118 008
- US-A1- 2014 003 963
- US-B2- 9 303 488

## Description

### Field of the invention

The present invention relates to a subsea hydrocarbon compression system.

In particular, the present invention relates to a subsea hydrocarbon flow compression system for receiving a hydrocarbon stream from at least one upstream flowline and supplying the hydrocarbon stream to at least one downstream flowline at an increased pressure, wherein the compression system comprises first and second compressor trains, wherein each compressor train comprises:
- an inlet port which is connectable to the at least one upstream flowline;
- an outlet port which is connectable to the at least one downstream flowline;
- a conditioning unit which is connected to the inlet port via a first flowline; and
- a first flow path for the hydrocarbon fluid comprising a compressor, which compressor is connected to the conditioning unit via a second flowline and to the outlet port via a third flowline,
wherein a controllable first valve is arranged in the third flowline of the first compressor train for controlling hydrocarbon flow from the compressor to the outlet port of the first compressor train.

The present invention also relates to a method of bringing a subsea hydrocarbon flow compression system from a parallel operating mode to a serial operating mode, which compression system is configured to receive a hydrocarbon stream from at least one upstream flowline and supplying the hydrocarbon stream to at least one downstream flowline at an increased pressure, and which compression system comprises first and second compressor trains.

### Background

In subsea hydrocarbon production and processing systems, there may be a need to "boost" hydrocarbon well-streams, i.e. to increase pressure of the hydrocarbon well-stream, e.g. to compensate for pressure losses in flowlines.

GB 2503927 A shows as a method and apparatus for removing hydrate plugs in a hydrocarbon production station. The method comprises the steps of fluidically isolating the production station by means of valves, diverting production flow to a bypass line, and adjusting the pressure in the production station to a level sufficient to melt the hydrate plugs by means of a pump/compressor unit and a cooler unit. Hydrate inhibitor such as methanol may be also bled into the system via a line.

US 2012/118008 A1 shows a method and apparatus for producing a combined gaseous hydrocarbon component stream and liquid hydrocarbon component stream. First and second multi-phase streams are processed in first and second trains that are structurally different from each other such that the first and second trains have different operating conditions. The first and second trains produce first and second gaseous hydrocarbon streams and first and second liquid hydrocarbon component streams. The first and second gaseous hydrocarbon streams are combined downstream of the first and second trains to provide a combined gaseous hydrocarbon component stream.

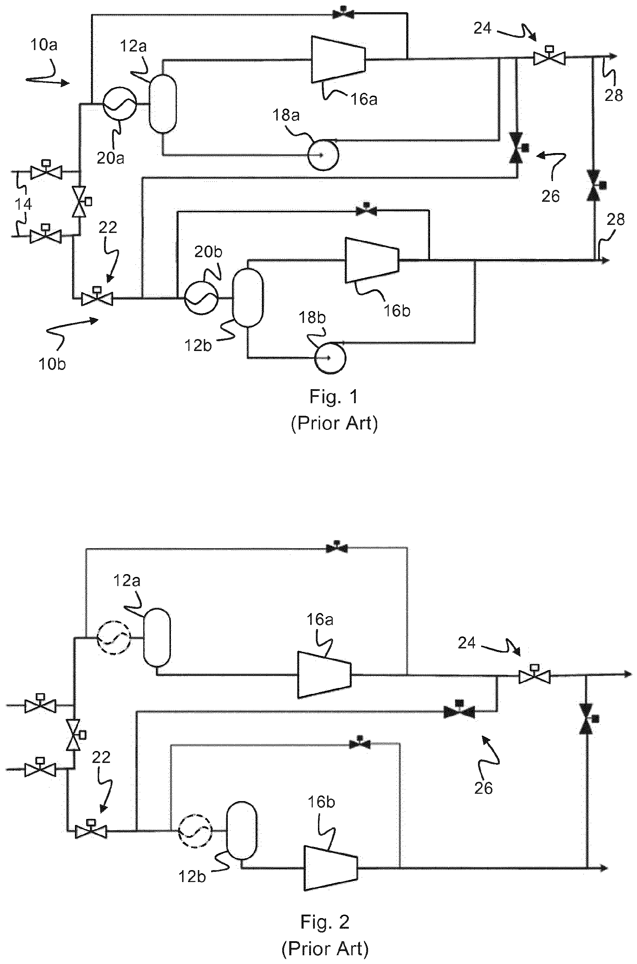

Fig. 1 shows a prior art subsea hydrocarbon flow compression system having two compressor trains 10a, 10b which can operate in parallel or in series.

When operating in parallel, a multiphase well-stream enters a fluid conditioning unit 12a, 12b of each compressor train 10a, 10b through one or more flowlines 14. In Fig. 1 the conditioning units 12a, 12b are liquid/gas separators 12a, 12b. In the separator 12a, 12b, gas and liquid, e.g. a condensate/water/MEG, is separated, and gas is led to a subsea compressor 16a, 16b where it is boosted. The liquid is led to and boosted by a pump 18a, 18b. Normally the liquid is commingled with the gas downstream of the compressor 16a, 16b for multiphase transport to a receiving facility (not shown).

The system shown in Fig. 1 is a dry-gas system due to the separators 12a, 12b being arranged to supply the compressors 16a, 16b with a fluid stream in which liquid phase components have been removed.

Each compression train 10a, 10b may have coolers, e.g. an inlet cooler 20a, 20b arranged upstream of the compressor 16a, 16b and/or an outlet cooler (not shown) arranged downstream of the compressor 16a, 16b. An anti-surge cooling functionality may be implemented in the inlet cooler 20a, 20b and/or in the outlet cooler, and/or in a separate anti-surge cooler (not shown). If an inlet cooler 20a, 20b is used, this cooler is always located upstream of the separator 12a, 12b to enhance knock-out of liquid in the separator 12a, 12b.

The conventional method of switching from parallel to serial operation is to route the gas out of the compressor 16a of the first compressor train 10a and into the inlet of the second compressor train 10b, e.g. by closing valves 22 and 24, and opening valve 26. In this manner, all the equipment in the system will be configured in series. In series configuration, the multiphase well-stream is separated in the first compressor train 10a and the liquid and gas phases are commingled prior to entering the second compressor train 10b. In the second compressor train 10b, the liquid and gas phases are again separated in separator 20b and again commingled prior to entering downstream flowline(s) 28.

In this system, the repeated separation and mixing of phases is a result of the arrangement and adds no functional benefits.

While the flow is divided between the separators 12a, 12b when the compressor trains 10a, 10b are operating in parallel, the separators 12a, 12b must be dimensioned for the full well-stream when the compressor trains 10a, 10b are operating in series. Although hydrocarbon massflow declines over the years prior to series operation (series operation is usually employed during the later production stages), actual volume rates can still be very high because of the declining pressure. In case of slugs or liquid surges, the separator 12a of the first compressor train 10a must be able to handle the full slug/surge in series operation, while the slugs will be shared between the separators 12a, 12b in parallel operation.

Normally, pumps have much higher pressure boosting capability than compressors, and series configuration is not required. Consequently, when the system operates in series the separator 12b and the pump 18b of the second compressor train 10b do not provide functional advantages, but instead contribute to critical failure modes for the system.

Fig. 2 shows another prior art subsea compression station having two compressor trains 10a, 10b which can be switched from operating in parallel to operating in series.

In this case, the compression station incorporates no separators. Instead, in each compressor train 10a, 10b a conditioning unit 12a, 12b in the form of a flow-conditioning device is arranged upstream of the compressor 16a, 16b to condition the liquid/gas mixture such that it complies with the requirements of the compressor 16a, 16b.

Consequently, the system shown in Fig. 2 is a wet-gas system in which the compressors 16a, 16b need to boost liquid phase components as well as gas phase components.

Similar to the system shown in Fig. 1, switching from parallel to serial operation mode involves routing the discharge of the first compressor train 10a into the inlet of the second compressor train 10b by closing valves 22 and 24, and opening valve 26.

In serial operation, the same drawback associated with the separator 12b in Fig. 1 is also present for the flow-conditioning device 12b in Fig. 2, i.e. that the flow-conditioning device 12b does not give any functional advantage in serial operation mode, but only constitutes possible points of failure in the system.

Surface compression plants are normally not arranged as separate trains with dedicated processing equipment incorporated in each train. A typical surface compression plant consists of an upstream processing system providing pre-processed gas to a downstream compression system. Switching from parallel to series is done by re-arranging pipes between the compressors, and the upstream processing system is not affected.

Normally, a surface compression system is made for operating either in parallel or in series, and switching of operating mode from parallel to series is rare. If, however, switching from parallel to series is required, this is done by on-site re-build of the pipe-arrangement of the system. For surface compression system, this can be done at an acceptable cost and usually requires limited production down-time. In subsea applications, however, any on-site re-build of the system will be prohibitively expensive and will also require a non-acceptable production down-time. Hence, a subsea compression system must be designed for all foreseen operation modes with a minimum need of manual intervention.

### Summary of the invention

With the abovementioned challenges and known solutions in mind, the present invention brings forward a subsea hydrocarbon flow compression system and an associated method which seek to solve or at least reduce at least one of the aforementioned problems or challenges.

According to one aspect, the invention relates to a subsea hydrocarbon flow compression system for receiving a hydrocarbon stream from at least one upstream flowline and supplying the hydrocarbon stream to at least one downstream flowline at an increased pressure, wherein the compression system comprises first and second compressor trains, wherein each compressor train comprises:
- an inlet port which is connectable to the at least one upstream flowline;
- an outlet port which is connectable to the at least one downstream flowline;
- a conditioning unit which is connected to the inlet port via a first flowline; and
- a first flow path for the hydrocarbon fluid comprising a compressor, which compressor is connected to the conditioning unit via a second flowline and to the outlet port via a third flowline,
wherein a controllable first valve is arranged in the third flowline of the first compressor train for controlling hydrocarbon flow from the compressor to the outlet port of the first compressor train, and wherein a controllable second valve is arranged in the second flowline of the second compressor train for controlling hydrocarbon flow from the conditioning unit to the compressor of the second compressor train, and wherein the system comprises:
- a first cross-over flowline interconnecting the third flowline of the first compressor train upstream of the first valve and the second flowline of the second compressor train downstream of the second valve, wherein a controllable first cross-over valve is arranged in the first cross-over flowline for controlling hydrocarbon flow through the first crossover flowline.

Consequently, each compressor train comprises an inlet port, a conditioning unit arranged downstream of the inlet port, a compressor arranged downstream of the conditioning unit, and an outlet port arranged downstream of the compressor. The flow compression system can be operated in a parallel operating mode in which the hydrocarbon flow, in each compressor train, is routed from the inlet port to the outlet port via the conditioning unit and the compressor in respective compressor train. The flow compression system can alternatively be operated in a series operating mode in which the hydrocarbon flow may be routed from the inlet port of the first compressor train to the outlet port of the second compressor train via the conditioning unit and the compressor of the first compressor train and, by virtue of the first cross-over flowline, via the compressor of the second compressor train.

The system may comprise a second cross-over flowline interconnecting the second flowline of the first compressor train and the second flowline of the second compressor train upstream of the second valve, wherein a controllable second cross-over valve may be arranged in the second cross-over flowline for controlling hydrocarbon flow through the second cross-over flowline. This allows the hydrocarbon flow to be routed from the conditioning unit of the first compressor train to the compressor of the second compressor train, or from the conditioning unit of the second compressor train to the compressor of the first compressor train.

The system may comprise a third cross-over flowline interconnecting the third flowline of the first compressor train downstream of the first valve and the third flowline of the second compressor train, wherein a controllable third cross-over valve may be arranged in the third cross-over flowline for controlling hydrocarbon flow through the third cross-over flowline.

At least one of said first and second compressor trains may comprise an inlet cooler arranged downstream of the conditioning unit and upstream of the compressor.

The second compressor train may comprise an inlet cooler arranged downstream of the conditioning unit and upstream of the compressor, wherein the inlet cooler of the second compressor train may be arranged downstream of said second valve, and wherein said first cross-over flowline may be connected to said second flowline of the second compressor train upstream of the inlet cooler.

At least one of said first and second compressor trains may comprise at least one of:
- an outlet cooler arranged downstream of the compressor; and
- an anti-surge cooler arranged in an anti-surge feed-back loop of the compressor.

An anti-surge cooling functionality may be embedded in any one of the inlet cooler and the outlet cooler.

Each compressor train may comprise:
- a second flow path for the hydrocarbon fluid arranged in parallel to said first flow path, which second flow path may comprise a pump which is connected to the conditioning unit via a fourth flowline and to the outlet port via a fifth flowline,
wherein said conditioning unit may comprise a separator for separating a multiphase hydrocarbon stream received by the conditioning unit into a first sub-stream comprising predominately a gaseous fluid phase and a second sub-stream comprising predominately a liquid fluid phase,
wherein said first flow path may be configured to receive the first sub-stream from the conditioning unit, and the second flow path may be configured to receive the second sub-stream from the conditioning unit,
wherein a controllable third valve may be arranged in the fifth flowline of the first compressor train for controlling hydrocarbon flow from the pump to the outlet port of the first compressor train, and
wherein the system may comprise:
   - a fourth cross-over flowline interconnecting the fifth flowline of the first compressor train upstream of the third valve and the third flowline of the second compressor train, wherein a controllable fourth cross-over valve may be arranged in the fourth cross-over flowline for controlling hydrocarbon flow through the fourth cross-over flowline.

The system may comprise a fifth cross-over flowline interconnecting the fourth flowline of the first compressor train and the fourth flowline of the second compressor train, wherein a controllable fifth cross-over valve may be arranged in the fifth cross-over flowline for controlling hydrocarbon flow through the fifth cross-over flowline. Also, a pump isolation valve may be arranged immediately upstream of each pump. This will allow the liquid fraction of the fluid emerging from the separator of the conditioning unit of the first compressor train to be led to pump of the second compressor train, and the fluid emerging from the separator of the conditioning unit of the second compressor train to be led to the pump of the first compressor train, thus allowing the pump of the first compressor train or the pump of the second compressor train to be disconnected from the fluid path and thus isolated from fluid flow.

Said inlet port of the first compressor train and said inlet port of the second compressor train may form a common inlet port and/or said outlet port of the first compressor train and said outlet port of the second compressor train may form a common outlet port.

Said conditioning unit of each compressor train may be any one of:
- a separator for separating a multiphase hydrocarbon stream into a first sub-stream comprising predominately a gaseous fluid phase and a second sub-stream comprising predominately a liquid fluid phase; and
- a flow-conditioning device for conditioning the liquid/gas ratio of the fluid such that it complies with the requirements of the compressor.

The compression system may have two, three, four or more compressor trains, of which at least two compressor trains are interconnected according to the invention to allow switching between said parallel operating mode and said serial operating mode.

According to another aspect, the invention relates a method of bringing a subsea hydrocarbon flow compression system from a parallel operating mode to a serial operating mode, which compression system is configured to receive a hydrocarbon stream from at least one upstream flowline and supply the hydrocarbon stream to at least one downstream flowline at an increased pressure, and which compression system comprises first and second compressor trains, wherein each compressor train comprises:
- a conditioning unit which, in said parallel operating mode, receives hydrocarbon fluid from an inlet port connected to the at least one upstream flowline; and
- a first flow path for the hydrocarbon fluid comprising a compressor which, in said parallel operating mode, receives hydrocarbon fluid from the conditioning unit and supplies hydrocarbon fluid to an outlet port connected to the at least one downstream flowline;
wherein the method comprises the steps of:
- closing a conduit path for the hydrocarbon fluid from the compressor to the outlet port of the first compressor train;
- closing a conduit path for the hydrocarbon fluid from the conditioning unit to the compressor of the second compressor train; and
- opening a conduit path for the hydrocarbon fluid from the compressor of the first compressor train to the compressor of the second compressor train.

This will allow hydrocarbon fluid to be supplied to the compressor of the first compressor train from the conditioning unit of the first compressor train but not from the conditioning unit of the second compressor train.

The method may comprise the step of opening a conduit path for the hydrocarbon fluid from the conditioning unit of the second compressor train to the compressor of the first compressor train, thus allowing, in the serial operating mode, the conditioning units of the first and second compressor trains to supply hydrocarbon fluid to the compressor of the first compressor train in parallel.

The method may comprise the steps of:
- opening a conduit path for the hydrocarbon fluid from the conditioning unit of the second compressor train to the compressor of the first compressor train; and
- closing a conduit path for the hydrocarbon fluid from the conditioning unit of the first compressor train to the compressor of the first compressor train,
thus allowing, in the serial operating mode, hydrocarbon fluid to be supplied to the compressor of the first compressor train from the conditioning unit of the second compressor train but not from the conditioning unit of the first compressor train (110a)

The method may comprise the step of opening a conduit path for the hydrocarbon fluid from the compressor of the second compressor train to the outlet port of the first compressor train.

The method may comprise the step of, in at least one of said compressor trains, routing the hydrocarbon fluid through an inlet cooler arranged downstream of the conditioning unit and upstream of the compressor.

The method may comprise the step of, in the second compressor train, routing the hydrocarbon fluid through an inlet cooler arranged downstream of the conditioning unit and upstream of the compressor in the second compressor train, wherein the inlet cooler of the second compressor train may be arranged downstream of said second valve, and wherein said first cross-over flowline may be connected to said second flowline of the second compressor train upstream of the inlet cooler.

The method may comprise the step of, in at least one of said compressor trains, routing the hydrocarbon fluid through at least one of:
- an outlet cooler arranged downstream of the compressor; and
- an anti-surge cooler arranged in an anti-surge feed-back loop of the compressor.

Each compressor train may comprise a second flow path comprising a pump which, in said parallel operating mode, receives hydrocarbon fluid from the conditioning unit and supplies hydrocarbon fluid to the outlet port, wherein the conditioning unit separates an incoming multiphase hydrocarbon fluid into a first sub-stream comprising predominately a gaseous fluid phase and a second sub-stream comprising predominately a liquid fluid phase, which first sub-stream is routed to the outlet port via the first flow path, and which second sub-stream is routed to the outlet port via the second flow path, wherein said method may comprise the steps of:
- closing a conduit path for the hydrocarbon fluid from the pump to the outlet port in the first compressor train; and
- opening a conduit path for the hydrocarbon fluid from the pump of the first compressor train to the outlet port of the second compressor train.

The method may comprise the step of:
- closing a conduit path for the hydrocarbon fluid from the conditioning unit of the first compressor train to the pump of the first compressor train; and
- opening a conduit path for the hydrocarbon fluid from the conditioning unit of the first compressor train to the pump of the second compressor train.

This will allow the pump of the first compressor train to be isolated from fluid flow.

Alternatively, the method may comprise the step of:
- closing a conduit path for the hydrocarbon fluid from the conditioning unit of the second compressor train to the pump of the second compressor train; and
- opening a conduit path for the hydrocarbon fluid from the conditioning unit of the second compressor train to the pump of the first compressor train.

This will allow the pump of the second compressor train to be isolated from fluid flow.

According to one aspect, the invention lies in how the crossover between the compressor trains is implemented when the subsea hydrocarbon flow compression system is switched from parallel to serial operation mode.

When in parallel operation mode, the subsea hydrocarbon flow compression system according to the invention generally operates in the same way as prior art systems.

However, when in serial operation mode, the implementation of the cross-over will enable the compressors (and their anti-surge loops, if present) to operate in series, while allowing the conditioning units and pumps (if present) to continue to operate in parallel.

Also, in some embodiments of the invention, the implementation of the cross-over will allow superfluous conditioning units and/or pump(s) (if present) to be isolated when the system is in serial operating mode (by isolation valves normally provided for each main component), and to serve as installed spares.

This brings about a number of benefits:
1. The size and/or rating of the conditioning units and/or pumps can be reduced because the flow and liquid slugs or surges can be shared between multiple conditioning units and/or pumps working in parallel (although the compressors operate in series). Alternatively, in cases when a conditioning unit and/or pump is not required in serial operating mode (e.g. due to reduced late life demand), such a unit can be isolated to serve as an installed spare.
2. It allows conditioning units and/or pumps that are not functionally required during serial operating mode to be isolated from the serial flow path of the hydrocarbon fluid, thus avoiding equipment in the flow path which are not functionally required and which could cause loss of production in case of failure.
3. In systems that incorporate pumps it is possible to maintain, in serial operating mode, multiple parallel liquid streams through the system and enable flexible routing of liquid to the downstream flowlines, keeping control on flow-assurance issues (e.g. MEG inhibition of flowlines).

Said compressors may be any type compressor suitable to boost, i.e. to compress and increase pressure of, a hydrocarbon fluid. Such compressors are known in the art and the details of which will not be discussed at any depth here.

Said pumps may be any type pump suitable to boost, i.e. increase the pressure of, a hydrocarbon fluid. Such pumps are known in the art and the details of which will not be discussed at any depth here.

Said conditioning units may be any one of a liquid/gas separator for separating a gas fraction and a liquid fraction from an incoming hydrocarbon fluid, and a flow conditioning device (FCD) configured to condition an incoming liquid/gas mixture of the hydrocarbon fluid such that it complies with the requirements of a downstream compressor. Such conditioning units are known in the art and the details of which will not be discussed at any depth here.

Said coolers may be any type suitable to cool a hydrocarbon stream. Such cooler are known in the art and the details of which will not be discussed at any depth here.

Above-discussed preferred and/or optional features of each aspect of the invention may be used, alone or in appropriate combination, in the other aspects of the invention.

In the following, one or more specific embodiments of the invention will be described in more detail with reference to the drawings.

### Description of the drawings

Following drawings are appended to facilitate the understanding of the invention:
Fig. 1 shows a prior art dry-gas subsea hydrocarbon flow compression system.
Fig. 2 shows a prior art wet-gas subsea hydrocarbon flow compression system.
Fig. 3 shows an embodiment of a wet-gas subsea hydrocarbon flow compression system according to the invention.
Fig. 4 shows an embodiment of a dry-gas subsea hydrocarbon flow compression system according to the invention.

It should be understood, however, that the drawings are not intended to limit the invention to the subject-matter depicted in the drawings.

In the drawings, like reference numerals have been used to indicate common parts, elements or features unless otherwise explicitly stated or implicitly understood by the context.

### Detailed description of the invention

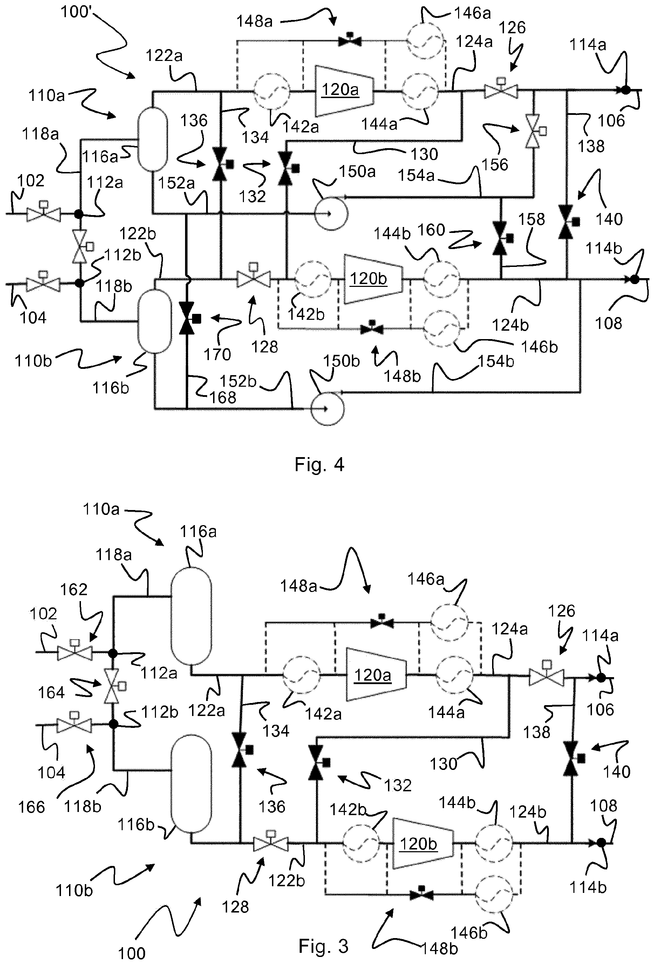

Fig. 3 shows an embodiment of a hydrocarbon flow compression system 100 according to the invention. The system 100 receives a hydrocarbon fluid stream from upstream flowlines 102, 104 and supplies the hydrocarbon fluid stream to downstream flowlines 106, 108 at an increased pressure.

The system 100 comprises a first compressor train 110a and a second compressor train 110b. Each compressor train 110a, 110b comprises an inlet port 112a, 112b which is connected to the upstream flowlines 102, 104 for receiving the hydrocarbon fluid from the same. Each compressor train 110a, 110b also comprises an outlet port 114a, 114b which is connected to the downstream flowlines 106, 108 for supplying the hydrocarbon fluid to the same. Each compressor train 110a, 110b further comprises a fluid conditioning unit 116a, 116b which is connected to the inlet port 112a, 112b via a first flowline 118a, 118b, and a compressor 120a, 120b which is connected to the fluid conditioning unit 116a, 116b via a second flowline 122a, 122b and to the outlet port 114a, 114b via a third flowline 124a, 124b.

Consequently, the first flow line 118a, 118b, the fluid conditioning unit 116a, 116b, the second flowline 122a, 122b, the compressor 120a, 120b and the third flowline 124a, 124b provide a flow path for the hydrocarbon fluid through each compressor train 110a, 110b.

Each fluid conditioning unit 116a, 116b comprises a flow conditioning device (FCD) which is configured to condition the liquid/gas mixture of the hydrocarbon fluid such that it complies with the requirements of the compressor 116a, 116b. FCD:s are known as such and will not be described further here. For the purpose of the invention, any prior art FCD can be used in the system shown in Fig. 3 to condition the hydrocarbon fluid such that it complies with the requirements of the compressor 116a, 116b.

Inlet valves 162, 164, 166 are arranged upstream of the inlet ports 112a, 112b to control routing of the hydrocarbon fluid from the upstream flowlines 102, 104 into the different compressor trains 110a, 110b. Inlet valve 164 can alternatively be substituted with a smallbore pipe for equalize pressure between the inlet ports 112a and 112b. Also, outlet valves (not shown) may be arranged downstream of the outlet ports 114a, 114b to control routing of the hydrocarbon fluid from the outlet ports 114a, 114b to the downstream flowlines 106, 108.

A controllable first valve 126 is arranged in the third flowline 124a of the first compressor train 110a for controlling hydrocarbon fluid flow from the compressor 120a to the outlet port 114a. Also, a controllable second valve 128 is arranged in the second flowline 122b of the second compressor train 110b for controlling hydrocarbon flow from the conditioning unit 116b to the compressor 120b.

Furthermore, a first cross-over flowline 130 interconnecting the third flowline 124a of the first compressor train 110a upstream of the first valve 126 and the second flowline 122b of the second compressor train 110b downstream of the second valve 128, and a controllable first cross-over valve 132 is arranged in the first cross-over flowline 130 for controlling hydrocarbon fluid flow through the first cross-over flowline 130.

When the system 100 operates in parallel mode, the first cross-over valve 132 is closed and valves 126 and 128 are open. Consequently, in this operating mode there are two parallel flow paths for the hydrocarbon fluid, i.e. the flow path created through each compressor train 110a, 110b by the first flow line 118a, 118b, the fluid conditioning unit 116a, 116b, the second flowline 122a, 122b, the compressor 120a, 120b and the third flowline 124a, 124b.

When switching from parallel to serial operation mode, the first valve 126 is closed, thus closing the conduit path for the hydrocarbon fluid from the compressor 120a to the outlet port 114a in the first compressor train 110a. Also, the second valve 128 is closed, thus closing the conduit path for the hydrocarbon fluid from the conditioning unit 116b to the compressor 120b in the second compressor train 110b. Furthermore, the first cross-over valve 132 is opened, thus opening a conduit path for the hydrocarbon fluid from the compressor 120a of the first compressor train 110a to the compressor 120b of the second compressor train 110b.

Consequently, when switching from parallel to serial operating mode, a conduit path for the hydrocarbon fluid is created through the conditioning unit 116a and the compressor 120a of the first compressor train 110a, and through the compressor 120b of the second compressor train 110b without routing the hydrocarbon fluid through the conditioning unit 116b of the second compressor train 110b.

The system 100 may comprise a second cross-over flowline 134 interconnecting the second flowline 122a of the first compressor train 110a and the second flowline 122b of the second compressor train 110b upstream of the second valve 128, and a controllable second crossover valve 136 may be arranged in the second cross-over flowline 134 for controlling hydrocarbon flow through the second cross-over flowline 134. This will allow the conditioning units 116a, 116b of the first and second compressor trains 110a, 110b to be operated in parallel also when the system 100 is otherwise operating in serial operating mode, i.e. with the compressors 120a and 120b operating in series (due to valves 126 and 128 being closed and valve 132 being open). In other words, when the second cross-over valve 136 is open, there will be a parallel fluid path for the hydrocarbon fluid through the conditioning units 116a and 116b to the compressor 120a, and thereafter a serial fluid path through the compressors 120a, 120b, thus allowing, in the serial operating mode, the conditioning units 116a, 116b of the first and second compressor trains 110a, 110b to supply hydrocarbon fluid to the compressor 120a of the first compressor train 110a in parallel.

Alternatively, the system may comprise valves (not show) that allow the conditioning unit 116a of the first compressor train 110a to be isolated from the inlet ports 12a, 112b, thus allowing the system, in serial operating mode, to be operated with both conditioning units 116a and 116b in parallel or with only one of the conditioning units 116a, 116b supplying fluid to the compressors 120a, 120b. This will allow any one of the conditioning units 116a, 116b to be disconnected from the fluid path when the system is operated in serial operating mode.

The system 100 may comprise a third cross-over flowline 138 interconnecting the third flowline 124a of the first compressor train 110a downstream of the first valve 126 and the third flowline 124b of the second compressor train 110b, and a controllable third cross-over valve 140 may be arranged in the third cross-over flowline 138 for controlling hydrocarbon flow through the same. This allows a conduit path for the hydrocarbon fluid to be opened from the compressor 120b of the second compressor train 110b to the outlet port 114a of the first compressor train 110a, thus allowing fluid to be routed to the outlet port 114a of the first compressor train 110a also when the system 100 is operating in the serial operation mode, i.e. when valve 126 is closed.

At least one of said first and second compressor trains 110a, 110b may comprises an inlet cooler 142a, 142b arranged downstream of the conditioning unit 116a, 116b and upstream of the compressor 120a, 120b.

If the second compressor train 110b comprises an inlet cooler 142b arranged downstream of the conditioning unit 116b and upstream of the compressor 120b, then the inlet cooler 142b of the second compressor train 110b is advantageously arranged downstream of said second valve 128, and said first cross-over flowline 130 is advantageously connected to said second flowline 122b of the second compressor train 110b upstream of the inlet cooler 142b. In this way, the inlet cooler 142b will be in the fluid path of the hydrocarbon fluid also when the system 100 is operated in the serial operation mode. However, the first cross-over flowline 130 may alternatively be connected to the second flowline 122b downstream of the inlet cooler 142b, in which case the inlet cooler 142b will be in the fluid path of the hydrocarbon fluid only when the system 100 is operated in parallel operation mode.

In addition to arranging inlet coolers 142a, 142b in at least one of said first and second compressor trains 110a, 110b, or as an alternative thereto, at least one of said first and second compressor trains 110a, 110b may comprise at least one of an outlet cooler 144a, 144b arranged downstream of the compressor 120a, 120b; and an anti-surge cooler 146a, 146b arranged in an anti-surge feed-back loop 148a, 148b of the respective compressor 120a, 120b.

Fig. 4 shows an embodiment of a dry-gas hydrocarbon flow compression system 100' according to the invention. The system 100' comprises the same features as previously discussed with reference to Fig. 3 and like reference numerals have been used to indicate common parts, elements or features unless otherwise stated.

However, the system 100' of Fig. 4 differs from the system 100 of Fig. 3 in that each compressor train 110a, 110b comprises a second flow path for the hydrocarbon fluid arranged in parallel to said first flow path, which second flow path comprises a pump 150a, 150b which is connected to the conditioning unit 116a, 116b via a fourth flowline 152a, 152b and to the outlet port 114a, 114b via a fifth flowline 154a, 154b. Also, in this embodiment the conditioning unit 116a, 116b in each compressor train 110a, 110b comprises a separator for separating a multiphase hydrocarbon stream received by the conditioning unit 116a, 116b into a first sub-stream comprising predominately a gaseous fluid phase and a second sub-stream comprising predominately a liquid fluid phase. The first flow path, i.e. comprising the compressor 120a, 120b, is configured to receive the first, gaseous sub-stream from the conditioning unit 116a, 116b, and the second flow path, i.e. comprising the pump 150a, 150b, is configured to receive the second, liquid sub-stream from the conditioning unit 116a, 116b. Consequently, the system 100' is a dry-gas hydrocarbon flow compression system.

Also, a controllable third valve 156 is arranged in the fifth flowline 154a of the first compressor train 110a for controlling hydrocarbon flow from the pump 150a to the outlet port 114a of the first compressor train 110a. Furthermore, the system 100' comprises a fourth cross-over flowline 158 interconnecting the fifth flowline 154a of the first compressor train 110a upstream of the third valve 156 and the third flowline 124b of the second compressor train 110b, wherein a controllable fourth cross-over valve 160 is arranged in the fourth crossover flowline 158 for controlling hydrocarbon flow through the fourth cross-over flowline 158.

When operating in parallel mode, cross-over valves 132, 136, 140 and 160 are closed and valves 126, 128 and 156 are open, thus allowing hydrocarbon fluid to flow from the upstream flowlines 102, 104 to the downstream flowlines 106, 108 in parallel in the first and second compressor trains 110a and 110b, wherein, in each compressor train 110a, 110b, the gaseous fraction of the hydrocarbon fluid is boosted in the compressor120a, 120b and the liquid fraction is boosted in the pump 150a, 150b.

When switching from parallel to serial operational mode, the first and second valves 126, 128 are closed, and the first and second cross-over valves 132, 136 are opened. This will close the conduit paths for the hydrocarbon fluid from the compressor 120a to the outlet port 114a in the first compressor train 110a and from the conditioning unit 116b to the compressor 120b in the second compressor train 110b, and open conduit paths from the compressor 120a of the first compressor train 110a to the compressor 120b of the second compressor train 110b and from the conditioning unit 116b of the second compressor train 110b to the compressor 120a of the first compressor train 110a.

The positions (open or closed) of the third valve 156 and the fourth cross-over valve 160 will decide which of the downstream flowlines 106, 108 will receive the liquid from the pump 150a in the first compressor train 110a, and the position of the third cross-over valve 140 will decide whether the gas output from the system will be disposed in a single flowline 114b or if the gas will be shared between flowlines 114a and 114b.

The system 100' may comprise a fifth cross-over flowline 168 interconnecting flowlines 152a and 152b, wherein a controllable fifth cross-over valve 170 may be arranged in the fifth cross-over flowline for controlling hydrocarbon flow through the same. Also, a pump isolation valve (not shown) may be arranged immediately upstream of each pump 150a and 150b. This will allow the liquid fraction of the fluid emerging from the separator of conditioning unit 116a to be led to pump 150b, and the fluid emerging from the separator of conditioning unit 116b to be led to pump 150a, thus allowing anyone of pumps 150a and 150b to be disconnected from the fluid path.

In the same way as the system 100 discussed with reference to Fig. 3, at least one of said first and second compressor trains 110a, 110b may comprises an inlet cooler 142a, 142b arranged downstream of the conditioning unit 116a, 116b and upstream of the compressor 120a, 120b.

However, if the system 100' comprises such an inlet cooler 142a, 142b, some liquid may condense in the cooler 142a, 142b and enter the compressor 120a, 120b. Consequently, for such an arrangement the compressor 120a, 120b should preferably be tolerant of liquid, i.e. be able to handle that at least some liquid is present in the incoming fluid stream.

In addition or as an alternative to said inlet coolers 142a, 142b, at least one of said first and second compressor trains 110a, 110b may comprise at least one of an outlet cooler 144a, 144b arranged downstream of the compressor 120a, 120b; and an anti-surge cooler 146a, 146b arranged in an anti-surge feed-back loop 148a, 148b of the respective compressor 120a, 120b.

In serial operation mode, some liquid may condense in the outlet cooler 144a of the first compressor train 110a (if present) and/or in the inlet cooler 142b of the second compressor trains 110b (if present). Consequently, in such an arrangement the compressor 120b of the second compressors train 110b should preferably be tolerant of liquid, i.e. be able to handle that at least some liquid is present in the incoming fluid stream.

In the preceding description, various aspects of the system and method according to the invention have been described with reference to the illustrative embodiments. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system and method, which are apparent to person skilled in the art to which the disclosed subject-matter pertains, are deemed to lie within the scope of the present invention as defined by the following claims.

## Claims

1. A subsea hydrocarbon flow compression system (100) for receiving a hydrocarbon stream from at least one upstream flowline (102, 104) and supplying the hydrocarbon stream to at least one downstream flowline (106, 108) at an increased pressure, wherein the compression system (100) comprises first and second compressor trains (110a, 110b), wherein each compressor train (110a, 110b) comprises:
- an inlet port (112a, 112b) which is connectable to the at least one upstream flowline (102, 104);
- an outlet port (114a, 114b) which is connectable to the at least one downstream flowline (106, 108);
- a conditioning unit (116a, 116b) which is connected to the inlet port (112a, 112b) via a first flowline (118a, 118b); and
- a first flow path for the hydrocarbon fluid comprising a compressor (120a, 120b), which compressor (120a, 120b) is connected to the conditioning unit (116a, 116b) via a second flowline (122a, 122b) and to the outlet port (114a, 114b) via a third flowline (124a, 124b),
wherein a controllable first valve (126) is arranged in the third flowline (124a) of the first compressor train (110a) for controlling hydrocarbon flow from the compressor (120a) to the outlet port (114a) of the first compressor train (110a),
**characterised in that** a controllable second valve (128) is arranged in the second flowline (122b) of the second compressor train (110b) for controlling hydrocarbon flow from the conditioning unit (116b) to the compressor (120b) of the second compressor train (110b), and **in that** the system (100) comprises:
- a first cross-over flowline (130) interconnecting the third flowline (124a) of the first compressor train (110a) upstream of the first valve (126) and the second flowline (122b) of the second compressor train (110b) downstream of the second valve (128), wherein a controllable first cross-over valve (132) is arranged in the first cross-over flowline (130) for controlling hydrocarbon flow through the first cross-over flowline (130).

2. The system (100) according to claim 1, **characterised in that** it comprises a second cross-over flowline (134) interconnecting the second flowline (122a) of the first compressor train (110a) and the second flowline (122b) of the second compressor train (110b) upstream of the second valve (128), wherein a controllable second cross-over valve (136) is arranged in the second cross-over flowline (134) for controlling hydrocarbon flow through the second cross-over flowline (134).

3. The system (100) according to any one of the preceding claims, **characterised in that** at least one of said first and second compressor trains (110a, 110b) comprises an inlet cooler (142a, 142b) arranged downstream of the conditioning unit (116a, 116b) and upstream of the compressor (120a, 120b).

4. The system (100) according to claim 3, **characterised in that** the second compressor train (110b) comprises an inlet cooler (142b) arranged downstream of the conditioning unit (116b) and upstream of the compressor (120b), wherein the inlet cooler (142b) of the second compressor train (1 10b) is arranged downstream of said second valve (128), and wherein said first cross-over flowline (130) is connected to said second flowline (122b) of the second compressor train (1 10b) upstream of the inlet cooler (142b).

5. The system (100) according to any one of the preceding claims, **characterised in that** each compressor train (110a, 110b) comprises:
- a second flow path for the hydrocarbon fluid arranged in parallel to said first flow path, which second flow path comprises a pump (150a, 150b) which is connected to the conditioning unit (116a, 116b) via a fourth flowline (152a, 152b) and to the outlet port (114a, 114b) via a fifth flowline (154a, 154b),
wherein said conditioning unit (116a, 116b) comprises a multiphase separator for separating a multiphase hydrocarbon stream received by the conditioning unit (116a, 116b) into a first sub-stream comprising predominately a gaseous fluid phase and a second sub-stream comprising predominately a liquid fluid phase,
wherein said first flow path is configured to receive the first sub-stream from the conditioning unit (116a, 116b), and the second flow path is configured to receive the second sub-stream from the conditioning unit (116a, 116b),
wherein a controllable third valve (156) is arranged in the fifth flowline (154a) of the first compressor train (110a) for controlling hydrocarbon flow from the pump (150a) to the outlet port (114a) of the first compressor train (110a), and
wherein the system (100) comprises:
- a fourth cross-over flowline (158) interconnecting the fifth flowline (154a) of the first compressor train (110a) upstream of the third valve (156) and the third flowline (124b) of the second compressor train (110b), wherein a controllable fourth crossover valve (160) is arranged in the fourth cross-over flowline (158) for controlling hydrocarbon flow through the fourth cross-over flowline (158).

6. The system (100) according to claim 5, wherein a fifth cross-over flowline (169) interconnecting the fourth flowline (152a) of the first compressor train (110a) and the fourth flowline (152b) of the second compressor train (1 10b), wherein a controllable fifth cross-over valve (170) is arranged in the fifth cross-over flowline (168) for controlling hydrocarbon flow through the fifth cross-over flowline (168).

7. A method of bringing a subsea hydrocarbon flow compression system (100) from a parallel operating mode to a serial operating mode, which compression system (100) is configured to receive a hydrocarbon stream from at least one upstream flowline (102, 104) and supply the hydrocarbon stream to at least one downstream flowline (106, 108) at an increased pressure, and which compression system (100) comprises first and second compressor trains (110a, 110b), wherein each compressor train (110a, 110b) comprises:
- a conditioning unit (116a, 116b) which, in said parallel operating mode, receives hydrocarbon fluid from an inlet port (112a, 112b) connected to the at least one upstream flowline (102, 104); and
- a first flow path for the hydrocarbon fluid comprising a compressor (120a, 120b) which, in said parallel operating mode, receives hydrocarbon fluid from the conditioning unit (116a, 166b) and supplies hydrocarbon fluid to an outlet port (114a, 114b) connected to the at least one downstream flowline (106, 108);
wherein the method comprises the steps of:
- closing a conduit path for the hydrocarbon fluid from the compressor (120a) to the outlet port (114a) of the first compressor train (110a);
- closing a conduit path for the hydrocarbon fluid from the conditioning unit (116b) to the compressor (120b) of the second compressor train (110b); and
- opening a conduit path for the hydrocarbon fluid from the compressor (120a) of the first compressor train (110a) to the compressor (120b) of the second compressor train (110b).

8. The method according to claim 7, wherein hydrocarbon fluid is supplied to the compressor (120a) of the first compressor train (110a) from the conditioning unit (116a) of the first compressor train (110a) but not from the conditioning unit (116b) of the second compressor train (110).

9. The method according to claim 7, comprising the step of opening a conduit path for the hydrocarbon fluid from the conditioning unit (116b) of the second compressor train (110b) to the compressor (120a) of the first compressor train (110a), thus allowing, in the serial operating mode, the conditioning units (116a, 116b) of the first and second compressor trains (110a, 110b) to supply hydrocarbon fluid to the compressor (120a) of the first compressor train (110a) in parallel.

10. The method according to claim 7, comprising the steps of:
- opening a conduit path for the hydrocarbon fluid from the conditioning unit (116b) of the second compressor train (110b) to the compressor (120a) of the first compressor train (110a); and
- closing a conduit path for the hydrocarbon fluid from the conditioning unit (116a) of the first compressor train (110a) to the compressor (120a) of the first compressor train (110a);
thus allowing, in the serial operating mode, hydrocarbon fluid to be supplied to the compressor (120a) of the first compressor train (110a) from the conditioning unit (116b) of the second compressor train (1 10b) but not from the conditioning unit (116a) of the first compressor train (110a).

11. The method according to any one of claims 7 to 10, comprising the step of, in at least one of said compressor trains (110a, 110b), routing the hydrocarbon fluid through an inlet cooler (142a, 142b) arranged downstream of the conditioning unit (116a, 116b) and upstream of the compressor (120a, 120b).

12. The method according to claim 11, comprising the step of, in the second compressor train (110b), routing the hydrocarbon fluid through an inlet cooler (142a, 142b) arranged downstream of the conditioning unit (116a, 116b) and upstream of the compressor (120a, 120b) in the second compressor train (110b), wherein the inlet cooler (142b) of the second compressor train (1 10b) is arranged downstream of said second valve (128), and wherein said first cross-over flowline (130) is connected to said second flowline (122b) of the second compressor train (1 10b) upstream of the inlet cooler (142b).

13. The method according to any one of claims 7 to 12, wherein each compressor train (110a, 110b) comprises a second flow path comprising a pump (150a, 150b) which, in said parallel operating mode, receives hydrocarbon fluid from the conditioning unit (116a, 166b) and supplies hydrocarbon fluid to the outlet port (114a, 114b), wherein the conditioning unit (116a, 116b) separates an incoming multiphase hydrocarbon fluid into a first sub-stream comprising predominately a gaseous fluid phase and a second sub-stream comprising predominately a liquid fluid phase, which first sub-stream is routed to the outlet port (114a, 114b) via the first flow path, and which second sub-stream is routed to the outlet port (114a, 114b) via the second flow path, which method comprises the steps of:
- closing a conduit path for the hydrocarbon fluid from the pump (150a) to the outlet port (114a) in the first compressor train (110a); and
- opening a conduit path for the hydrocarbon fluid from the pump (150a) of the first compressor train (110a) to the outlet port (114b) of the second compressor train (110b).

14. The method according to claim 13, comprising the step of:
- closing a conduit path for the hydrocarbon fluid from the conditioning unit (116a) of the first compressor train (110a) to the pump (150a) of the first compressor train (110a); and
- opening a conduit path for the hydrocarbon fluid from the conditioning unit (116a) of the first compressor train (110a) to the pump (150b) of the second compressor train (110b).

15. The method according to claim 13, comprising the step of:
- closing a conduit path for the hydrocarbon fluid from the conditioning unit (116b) of the second compressor train (110b) to the pump (150b) of the second compressor train (110b); and
- opening a conduit path for the hydrocarbon fluid from the conditioning unit (116b) of the second compressor train (110b) to the pump (150a) of the first compressor train (110a).

## Patentansprüche

1. Unterwasser-Kohlenwasserstofffluss-Kompressionssystem (100) zum Aufnehmen eines Kohlenwasserstoffstroms von mindestens einer stromaufwärtigen Durchflussleitung (102, 104) und Speisen des Kohlenwasserstoffstroms in mindestens eine stromabwärtige Durchflussleitung (106, 108) bei einem erhöhten Druck,
wobei das Kompressionssystem (100) einen ersten und zweiten Verdichterstrang (110a, 110b) umfasst, wobei jeder Verdichterstrang (110a, 110b) Folgendes umfasst:
- eine Einlassöffnung (112a, 112b), die mit der mindestens einen stromaufwärtigen Durchflussleitung (102, 104) verbunden werden kann;
- eine Auslassöffnung (114a, 114b), die mit der mindestens einen stromabwärtigen Durchflussleitung (106, 108) verbunden werden kann;
- eine Konditioniereinheit (116a, 116b), die mit der Einlassöffnung (112a, 112b) über eine erste Durchflussleitung (118a, 118b) verbunden ist; und
- einen ersten Fließweg für das Kohlenwasserstofffluid, umfassend einen Verdichter (120a, 120b), wobei der Verdichter (120a, 120b) mit der Konditioniereinheit (116a, 116b) über eine zweite Durchflussleitung (122a, 122b) und mit der Auslassöffnung (114a, 114b) über eine dritte Durchflussleitung (124a, 124b) verbunden ist,
wobei ein steuerbares erstes Ventil (126) in der dritten Durchflussleitung (124a) des ersten Verdichterstrangs (110a) angeordnet ist, um den Kohlenwasserstofffluss vom Verdichter (120a) zur Auslassöffnung (114a) des ersten Verdichterstrangs (110a) zu steuern, **dadurch gekennzeichnet, dass** ein steuerbares zweites Ventil (128) in der zweiten Durchflussleitung (122b) des zweiten Verdichterstrangs (110b) angeordnet ist, um den Kohlenwasserstofffluss von der Konditioniereinheit (116b) zum Verdichter (120b) des zweiten Verdichterstrangs (110b) zu steuern, und dadurch, dass das System (100) Folgendes umfasst:
- eine erste Cross-over-Durchflussleitung (130), welche die dritte Durchflussleitung (124a) des ersten Verdichterstrangs (110a) stromaufwärts von dem ersten Ventil (126) und die zweite Durchflussleitung (122b) des zweiten Verdichterstrangs (110b) stromabwärts von dem zweiten Ventil (128) miteinander verbindet, wobei ein steuerbares erstes Cross-over-Ventil (132) in der ersten Cross-over-Durchflussleitung (130) angeordnet ist, um den Kohlenwasserstofffluss durch die erste Cross-over-Durchflussleitung (130) zu steuern.

2. System (100) nach Anspruch 1, **dadurch gekennzeichnet, dass** es eine zweite Crossover-Durchflussleitung (134) umfasst, welche die zweite Durchflussleitung (122a) des ersten Verdichterstrangs (110a) und die zweite Durchflussleitung (122b) des zweiten Verdichterstrangs (110b) stromaufwärts von dem zweiten Ventil (128) verbindet, wobei ein steuerbares zweites Cross-over-Ventil (136) in der zweiten Cross-over-Durchflussleitung (134) angeordnet ist, um den Kohlenwasserstofffluss durch die zweite Cross-over-Durchflussleitung (134) zu steuern.

3. System (100) nach einem der vorhergehenden Ansprüche, **dadurch gekennzeichnet, dass** mindestens einer des ersten und zweiten Verdichterstrangs (110a, 110b) einen Einlasskühler (142a, 142b) umfasst, der stromabwärts von der Konditioniereinheit (116a, 116b) und stromaufwärts von dem Verdichter (120a, 120b) angeordnet ist.

4. System (100) nach Anspruch 3, **dadurch gekennzeichnet, dass** der zweite Verdichterstrang (110b) einen Einlasskühler (142b) umfasst, der stromabwärts von der Konditioniereinheit (116b) und stromaufwärts von dem Verdichter (120b) angeordnet ist, wobei der Einlasskühler (142b) des zweiten Verdichterstrangs (110b) stromabwärts von dem zweiten Ventil (128) angeordnet ist, und wobei die erste Cross-over-Durchflussleitung (130) mit der zweiten Durchflussleitung (122b) des zweiten Verdichterstrangs (110b) stromaufwärts von dem Einlasskühler (142b) verbunden ist.

5. System (100) nach einem der vorhergehenden Ansprüche, **dadurch gekennzeichnet, dass** jeder Verdichterstrang (110a, 110b) Folgendes umfasst:
- einen zweiten Fließweg für das Kohlenwasserstofffluid, der parallel zu dem ersten Fließweg angeordnet ist, wobei der zweite Fließweg eine Pumpe (150a, 150b) umfasst, die mit der Konditioniereinheit (116a, 116b) über eine vierte Durchflussleitung (152a, 152b) und mit der Auslassöffnung (114a, 114b) über eine fünfte Durchflussleitung (154a, 154b) verbunden ist,
wobei die Konditioniereinheit (116a, 116b) eine mehrphasige Trennvorrichtung zum Trennen eines mehrphasigen Kohlenwasserstoffstroms, der von der Konditioniereinheit (116a, 116b) aufgenommen wird, in einen ersten Teilstrom, der überwiegend eine gasförmige Fluidphase umfasst, und einen zweiten Teilstrom umfasst, der überwiegend eine flüssige Fluidphase umfasst,
wobei der erste Fließweg konfiguriert ist, um den ersten Teilstrom von der Konditioniereinheit (116a, 116b) aufzunehmen, und der zweite Fließweg konfiguriert ist, um den zweiten Teilstrom von der Konditioniereinheit (116a, 116b) aufzunehmen,
wobei ein steuerbares drittes Ventil (156) in der fünften Durchflussleitung (154a) des ersten Verdichterstrangs (110a) angeordnet ist, um den Kohlenwasserstofffluss von der Pumpe (150a) zu der Auslassöffnung (114a) des ersten Verdichterstrangs (110a) zu steuern und
wobei das System (100) Folgendes umfasst:
- eine vierte Cross-over-Durchflussleitung (158), welche die fünfte Durchflussleitung (154a) des ersten Verdichterstrangs (110a) stromaufwärts von dem dritten Ventil (156) und die dritte Durchflussleitung (124b) des zweiten Verdichterstrangs (110b) miteinander verbindet, wobei ein steuerbares viertes Cross-over-Ventil (160) in der vierten Cross-over-Durchflussleitung (158) angeordnet ist, um den Kohlenwasserstofffluss durch die vierte Cross-over-Durchflussleitung (158) zu steuern.

6. System (100) nach Anspruch 5, wobei eine fünfte Cross-over-Durchflussleitung (169) die vierte Durchflussleitung (152a) des ersten Verdichterstrangs (110a) und die vierte Durchflussleitung (152b) des zweiten Verdichterstrangs (110b) miteinander verbindet, wobei ein steuerbares fünftes Cross-over-Ventil (170) in der fünften Cross-over-Durchflussleitung (168) angeordnet ist, um den Kohlenwasserstofffluss durch die fünfte Cross-over-Durchflussleitung (168) zu steuern.

7. Verfahren zum Überführen eines Unterwasser-Kohlenwasserstofffluss-Kompressionssystems (100) von einem parallelen Betriebsmodus in einen Reihenbetriebsmodus, wobei das Kompressionssystem (100) konfiguriert ist, um einen Kohlenwasserstoffstrom von mindestens einer stromaufwärtigen Durchflussleitung (102, 104) aufzunehmen und den Kohlenwasserstoffstrom in mindestens eine stromabwärtige Durchflussleitung (106, 108) bei einem erhöhten Druck zu speisen, und wobei das Kompressionssystem (100) einen ersten und zweiten Verdichterstrang (110a, 110b) umfasst, wobei jeder Verdichterstrang (110a, 110b) Folgendes umfasst:
- eine Konditioniereinheit (116a, 116b), die in dem parallelen Betriebsmodus Kohlenwasserstofffluid von einer Einlassöffnung (112a, 112b) aufnimmt, die mit der mindestens einen stromaufwärtigen Durchflussleitung (102, 104 ) verbunden ist; und
- einen ersten Fließweg für das Kohlenwasserstofffluid, umfassend einen Verdichter (120a, 120b), der in dem parallelen Betriebsmodus Kohlenwasserstofffluid von der Konditioniereinheit (116a, 116b) aufnimmt und Kohlenwasserstofffluid in eine Auslassöffnung (114a, 114b) speist, die mit der mindestens einen stromabwärtigen Durchflussleitung (106, 108) verbunden ist;
wobei das Verfahren die folgenden Schritte umfasst:
- Schließen eines Leitungswegs für das Kohlenwasserstofffluid von dem Verdichter (120a) zu der Auslassöffnung (114a) des ersten Verdichterstrangs (110a);
- Schließen eines Leitungswegs für das Kohlenwasserstofffluid von der Konditioniereinheit (116b) zu dem Verdichter (120b) des zweiten Verdichterstrangs (110b); und
- Öffnen eines Leitungswegs für das Kohlenwasserstofffluid von dem Verdichter (120a) des ersten Verdichterstrangs (110a) zu dem Verdichter (120b) des zweiten Verdichterstrangs (110b).

8. Verfahren nach Anspruch 7, wobei Kohlenwasserstofffluid in den Verdichter (120a) des ersten Verdichterstrangs (110a) von der Konditioniereinheit (116a) des ersten Verdichterstrangs (110a), jedoch nicht von der Konditioniereinheit (116b) des zweiten Verdichterstrangs (110) gespeist wird.

9. Verfahren nach Anspruch 7, umfassend den Schritt des Öffnens eines Leitungswegs für das Kohlenwasserstofffluid von der Konditioniereinheit (116b) des zweiten Verdichterstrangs (110b) zu dem Verdichter (120a) des ersten Verdichterstrangs (110a), wodurch in dem Reihenbetriebsmodus die Konditioniereinheiten (116a, 116b) des ersten und zweiten Verdichterstrangs (110a, 110b) Kohlenwasserstofffluid parallel in den Verdichter (120a) des ersten Verdichterstrangs (110a) speisen können.

10. Verfahren nach Anspruch 7, umfassend die folgenden Schritte:
- Öffnen eines Leitungswegs für das Kohlenwasserstofffluid von der Konditioniereinheit (116b) des zweiten Verdichterstrangs (110b) zu dem Verdichter (120a) des ersten Verdichterstrangs (110a); und
- Schließen eines Leitungswegs für das Kohlenwasserstofffluid von der Konditioniereinheit (116a) des ersten Verdichterstrangs (110a) zu dem Verdichter (120a) des ersten Verdichterstrangs (110a);
wodurch in dem Reihenbetriebsmodus Kohlenwasserstofffluid in den Verdichter (120a) des ersten Verdichterstrangs (110a) von der Konditioniereinheit (116b) des zweiten Verdichterstrangs (110b), jedoch nicht von der Konditioniereinheit (116a) des ersten Verdichterstrangs (110a) gespeist werden kann.

11. Verfahren nach einem der Ansprüche 7 bis 10, umfassend den Schritt, in mindestens einem der Verdichterstränge (110a, 110b), des Leitens des Kohlenwasserstofffluids durch einen Einlasskühler (142a, 142b), der stromabwärts von der Konditioniereinheit (116a, 116b) und stromaufwärts von dem Verdichter (120a, 120b) angeordnet ist.

12. Verfahren nach Anspruch 11, umfassend den Schritt, in dem zweiten Verdichterstrang (110b), des Leitens des Kohlenwasserstofffluids durch einen Einlasskühler (142a, 142b), der stromabwärts von der Konditioniereinheit (116a, 116b) und stromaufwärts von dem Verdichter (120a, 120b) in dem zweiten Verdichterstrang (110b) angeordnet ist, wobei der Einlasskühler (142b) des zweiten Verdichterstrangs (110b) stromabwärts von dem zweiten Ventil (128) angeordnet ist, und wobei die erste Cross-over-Durchflussleitung (130) mit der zweiten Durchflussleitung (122b) des zweiten Verdichterstrangs (110b) stromaufwärts von dem Einlasskühler (142b) verbunden ist.

13. Verfahren nach einem der Ansprüche 7 bis 12, wobei jeder Verdichterstrang (110a, 110b) einen zweiten Fließweg umfasst, der eine Pumpe (150a, 150b) umfasst, die in dem parallelen Betriebsmodus Kohlenwasserstofffluid von der Konditioniereinheit (116a, 116b) aufnimmt und Kohlenwasserstofffluid in die Auslassöffnung (114a, 114b) speist, wobei die Konditioniereinheit (116a, 116b) ein ankommendes mehrphasiges Kohlenwasserstofffluid in einen ersten Teilstrom, der überwiegend eine gasförmige Fluidphase umfasst, und einen zweiten Teilstrom trennt, der überwiegend eine flüssige Fluidphase umfasst, wobei der erste Teilstrom über den ersten Fließweg zu der Auslassöffnung (114a, 114b) geleitet wird, und wobei der zweite Teilstrom über den zweiten Fließweg zu der Auslassöffnung (114a, 114b) geleitet wird, wobei das Verfahren die folgenden Schritte umfasst:
- Schließen eines Leitungswegs für das Kohlenwasserstofffluid von der Pumpe (150a) zu der Auslassöffnung (114a) in dem ersten Verdichterstrang (110a); und
- Öffnen eines Leitungswegs für das Kohlenwasserstofffluid von der Pumpe (150a) des ersten Verdichterstrangs (110a) zu der Auslassöffnung (114b) des zweiten Verdichterstrangs (110b).

14. Verfahren nach Anspruch 13, umfassend den folgenden Schritt:
- Schließen eines Leitungswegs für das Kohlenwasserstofffluid von der Konditioniereinheit (116a) des ersten Verdichterstrangs (110a) zu der Pumpe (150a) des ersten Verdichterstrangs (110a); und
- Öffnen eines Leitungswegs für das Kohlenwasserstofffluid von der Konditioniereinheit (116a) des ersten Verdichterstrangs (110a) zu der Pumpe (150b) des zweiten Verdichterstrangs (110b).

15. Verfahren nach Anspruch 13, umfassend den folgenden Schritt:
- Schließen eines Leitungswegs für das Kohlenwasserstofffluid von der Konditioniereinheit (116b) des zweiten Verdichterstrangs (110b) zu der Pumpe (150b) des zweiten Verdichterstrangs (110b); und
- Öffnen eines Leitungswegs für das Kohlenwasserstofffluid von der Konditioniereinheit (116b) des zweiten Verdichterstrangs (110b) zu der Pumpe (150a) des ersten Verdichterstrangs (110a).

## Revendications

1. Système sous-marin de compression d'écoulement d'hydrocarbures (100) pour recevoir un flux d'hydrocarbures depuis au moins une conduite d'écoulement en amont (102, 104) et distribuer le flux d'hydrocarbures à au moins une conduite d'écoulement en aval (106, 108) à une pression accrue,
dans lequel le système de compression (100) comprend des premier et deuxième trains de compresseurs (110a, 110b), dans lequel chaque train de compresseurs (110a, 110b) comprend :
- un orifice d'entrée (112a, 112b) qui peut être relié à l'au moins une conduite d'écoulement en amont (102, 104) ;
- un orifice de sortie (114a, 114b) qui peut être relié à l'au moins une conduite d'écoulement en aval (106, 108) ;
- une unité de conditionnement (116a, 116b) qui peut être reliée à l'orifice d'entrée (112a, 112b) par l'intermédiaire d'une première conduite d'écoulement (118a, 118b) ; et
- une première voie d'écoulement du fluide hydrocarbure comprenant un compresseur (120a, 120b), ledit compresseur (120a, 120b) étant relié à l'unité de conditionnement (116a, 116b) par l'intermédiaire d'une deuxième conduite d'écoulement (122a, 122b) et à l'orifice de sortie (114a, 114b) par l'intermédiaire d'une troisième conduite d'écoulement (124a, 124b),
dans lequel une première vanne pouvant être commandée (126) est agencée dans la troisième conduite d'écoulement (124a) du premier train de compresseurs (110a) pour commander un écoulement d'hydrocarbures depuis le compresseur (120a) jusqu'à l'orifice de sortie (114a) du premier train de compresseurs (110a),
**caractérisé en ce qu'**une deuxième vanne pouvant être commandée (128) est agencée dans la deuxième conduite d'écoulement (122b) du deuxième train de compresseurs (110b) pour commander un écoulement d'hydrocarbures depuis l'unité de conditionnement (116b) jusqu'au compresseur (120b) du deuxième train de compresseurs (110b), et **en ce que** le système (100) comprend :
- une première conduite d'écoulement de jonction (130) interconnectant la troisième conduite d'écoulement (124a) du premier train de compresseurs (110a) en amont de la première vanne (126) et la deuxième conduite d'écoulement (122b) du deuxième train de compresseurs (110b) en aval de la deuxième vanne (128), dans lequel une première vanne de jonction pouvant être commandée (132) est agencée dans la première conduite d'écoulement de jonction (130) pour commander un écoulement d'hydrocarbures à travers la première conduite d'écoulement de jonction (130).

2. Système (100) selon la revendication 1, **caractérisé en ce qu'**il comprend une deuxième conduite d'écoulement de jonction (134) interconnectant la deuxième conduite d'écoulement (122a) du premier train de compresseurs (110a) et la deuxième conduite d'écoulement (122b) du deuxième train de compresseurs (110b) en amont de la deuxième vanne (128), dans lequel une deuxième vanne de jonction pouvant être commandée (136) est agencée dans la deuxième conduite d'écoulement de jonction (134) pour commander un écoulement d'hydrocarbures à travers la deuxième conduite d'écoulement de jonction (134).

3. Système (100) selon l'une quelconque des revendications précédentes, **caractérisé en ce qu'**au moins l'un parmi lesdits premier et deuxième trains de compresseurs (110a, 110b) comprend un refroidisseur d'entrée (142a, 142b) agencé en aval de l'unité de conditionnement (116a, 116b) et en amont du compresseur (120a, 120b).

4. Système (100) selon la revendication 3, **caractérisé en ce que** le deuxième train de compresseurs (110b) comprend un refroidisseur d'entrée (142b) agencé en aval de l'unité de conditionnement (116b) et en amont du compresseur (120b), dans lequel le refroidisseur d'entrée (142b) du deuxième train de compresseurs (110b) est agencé en aval de la deuxième vanne (128), et dans lequel ladite première conduite d'écoulement de jonction (130) est reliée à ladite deuxième conduite d'écoulement (122b) du deuxième train de compresseurs (110b) en amont du refroidisseur d'entrée (142b).

5. Système (100) selon l'une quelconque des revendications précédentes, **caractérisé en ce que** chaque train de compresseurs (110a, 110b) comprend :
- une deuxième voie d'écoulement pour le fluide hydrocarbure agencée en parallèle à ladite première voie d'écoulement, ladite deuxième voie d'écoulement comprenant une pompe (150a, 150b) qui est reliée à l'unité de conditionnement (116a, 116b) par l'intermédiaire d'une quatrième conduite d'écoulement (152a, 152b) et à l'orifice de sortie (114a, 114b) par l'intermédiaire d'une cinquième conduite d'écoulement (154a, 154b),
dans lequel ladite unité de conditionnement (116a, 116b) comprend un séparateur multiphasé pour séparer un flux d'hydrocarbures multiphasé reçu par l'unité de conditionnement (116a, 116b) en un premier sous-flux comprenant principalement une phase fluide gazeuse et un deuxième sous-flux comprenant principalement une phase fluide liquide,
dans lequel ladite première voie d'écoulement est configurée pour recevoir le premier sous-flux depuis l'unité de conditionnement (116a, 116b), et la deuxième voie d'écoulement est configurée pour recevoir le deuxième sous-flux depuis l'unité de conditionnement (116a, 116b),
dans lequel une troisième vanne pouvant être commandée (156) est agencée dans la cinquième conduite d'écoulement (154a) du premier train de compresseurs (110a) pour commander un écoulement d'hydrocarbures depuis la pompe (150a) jusqu'à l'orifice de sortie (114a) du premier train de compresseurs (110a), et
dans lequel le système (100) comprend :
- une quatrième conduite d'écoulement de jonction (158) interconnectant la cinquième conduite d'écoulement (154a) du premier train de compresseurs (110a) en amont de la troisième vanne (156) et la troisième conduite d'écoulement (124b) du deuxième train de compresseurs (110b), dans lequel une quatrième vanne de jonction pouvant être commandée (160) est agencée dans la quatrième conduite d'écoulement de jonction (158) pour commander un écoulement d'hydrocarbures à travers la quatrième conduite d'écoulement de jonction (158).

6. Système (100) selon la revendication 5, dans lequel une cinquième conduite d'écoulement de jonction (169) interconnecte la quatrième conduite d'écoulement (152a) du premier train de compresseurs (110a) et la quatrième conduite d'écoulement (152b) du deuxième train de compresseurs (110b), dans lequel une cinquième vanne de jonction pouvant être commandée (170) est agencée dans la cinquième conduite d'écoulement de jonction (168) pour commander un écoulement d'hydrocarbures à travers la cinquième conduite d'écoulement de jonction (168).

7. Procédé pour faire passer un système sous-marin de compression d'écoulement d'hydrocarbures (100) d'un mode de fonctionnement parallèle à un mode de fonctionnement en série, ledit système de compression (100) étant configuré pour recevoir un flux d'hydrocarbures depuis au moins une conduite d'écoulement en amont (102, 104) et distribuer le flux d'hydrocarbures à au moins une conduite d'écoulement en aval (106, 108) à une pression accrue, et ledit système de compression (100) comprenant des premier et deuxième trains de compresseurs (110a, 110b), dans lequel chaque train de compresseurs (110a, 110b) comprend :
- une unité de conditionnement (116a, 116b) qui, dans ledit mode de fonctionnement parallèle, reçoit un fluide hydrocarbure depuis un orifice d'entrée (112a, 112b) relié à l'au moins une conduite d'écoulement en amont (102, 104) ; et
- une première voie d'écoulement du fluide hydrocarbure comprenant un compresseur (120a, 120b) qui, dans ledit mode de fonctionnement parallèle, reçoit du fluide hydrocarbure depuis l'unité de conditionnement (116a, 116b) et distribue du fluide hydrocarbure à un orifice de sortie (114a, 114b) relié à l'au moins une conduite d'écoulement en aval (106, 108) ;
dans lequel le procédé comprend les étapes suivantes :
- la fermeture d'une voie de conduit pour le fluide hydrocarbure depuis le compresseur (120a) jusqu'à l'orifice de sortie (114a) du premier train de compresseurs (110a) ;
- la fermeture d'une voie de conduit pour le fluide hydrocarbure depuis l'unité de conditionnement (116b) jusqu'au compresseur (120b) du deuxième train de compresseurs (110b) ; et
- l'ouverture d'une voie de conduit pour le fluide hydrocarbure depuis le compresseur (120a) du premier train de compresseurs (110a) jusqu'au compresseur (120b) du deuxième train de compresseurs (110b).

8. Procédé selon la revendication 7, dans lequel du fluide hydrocarbure est distribué au compresseur (120a) du premier train de compresseurs (110a) depuis l'unité de conditionnement (116a) du premier train de compresseurs (110a) mais pas depuis l'unité de conditionnement (116b) du deuxième train de compresseurs (110).

9. Procédé selon la revendication 7, comprenant l'étape de l'ouverture d'une voie de conduit pour le fluide hydrocarbure depuis l'unité de conditionnement (116b) du deuxième train de compresseurs (110b) jusqu'au compresseur (120a) du premier train de compresseurs (110a), en permettant ainsi, dans le mode de fonctionnement en série, aux unités de conditionnement (116a, 116b) des premier et deuxième trains de compresseurs (110a, 110b) de distribuer du fluide hydrocarbure au compresseur (120a) du premier train de compresseurs (110a) en parallèle.

10. Procédé selon la revendication 7, comprenant les étapes suivantes :
- l'ouverture d'une voie de conduit pour le fluide hydrocarbure depuis l'unité de conditionnement (116b) du deuxième train de compresseurs (110b) jusqu'au compresseur (120a) du premier train de compresseurs (110a) ; et
- la fermeture d'une voie de conduit pour le fluide hydrocarbure depuis l'unité de conditionnement (116a) du premier train de compresseurs (110a) jusqu'au compresseur (120a) du premier train de compresseurs (110a) ;
en permettant ainsi, dans le mode de fonctionnement en série, au fluide hydrocarbure d'être distribué au compresseur (120a) du premier train de compresseur (110a) depuis l'unité de conditionnement (116b) du deuxième train de compresseurs (110b) mais pas depuis l'unité de conditionnement (116a) du premier train de compresseurs (110a).

11. Procédé selon l'une quelconque des revendications 7 à 10, comprenant l'étape de, dans au moins l'un desdits trains de compresseur (110a, 110b), l'acheminement du fluide hydrocarbure à travers un refroidisseur d'entrée (142a, 142b) agencé en aval de l'unité de conditionnement (116a, 116b) et en amont du compresseur (120a, 120b).

12. Procédé selon la revendication 11, comprenant l'étape de, dans le deuxième train de compresseur (110b), l'acheminement du fluide hydrocarbure à travers un refroidisseur d'entrée (142a, 142b) agencé en aval de l'unité de conditionnement (116a, 116b) et en amont du compresseur (120a, 120b) dans le deuxième train de compresseurs (110b), dans lequel le refroidisseur d'entrée (142b) du deuxième train de compresseurs (110b) est agencé en aval de ladite deuxième vanne (128), et dans lequel ladite première conduite d'écoulement de jonction (130) est reliée à ladite deuxième conduite d'écoulement (122b) du deuxième train de compresseurs (110b) en amont du refroidisseur d'entrée (142b).

13. Procédé selon l'une quelconque des revendications 7 à 12, dans lequel chaque train de compresseurs (110a, 110b) comprend une deuxième voie d'écoulement comprenant une pompe (150a, 150b) qui, dans ledit mode de fonctionnement parallèle, reçoit un fluide hydrocarbure depuis l'unité de conditionnement (116a, 166b) et distribue du fluide hydrocarbure à l'orifice de sortie (114a, 114b), dans lequel l'unité de conditionnement (116a, 116b) sépare un flux d'hydrocarbures multiphasé entrant en un premier sous-flux comprenant principalement une phase fluide gazeuse et un deuxième sous-flux comprenant principalement une phase fluide liquide, ledit premier sous-flux étant acheminé jusqu'à l'orifice de sortie (114a, 114b) par l'intermédiaire de la première voie d'écoulement, et ledit deuxième sous-flux étant acheminé jusqu'à l'orifice de sortie (114a, 114b) par l'intermédiaire de la deuxième voie d'écoulement, le procédé comprenant les étapes suivantes :
- la fermeture d'une voie de conduit pour le fluide hydrocarbure depuis la pompe (150a) jusqu'à l'orifice de sortie (114a) dans le premier train de compresseurs (110a) ; et
- l'ouverture d'une voie de conduit pour le fluide hydrocarbure depuis la pompe (150a) du premier train de compresseurs (110a) jusqu'à l'orifice de sortie (114b) du deuxième train de compresseurs (110b).

14. Procédé selon la revendication 13, comprenant l'étape suivante :
- la fermeture d'une voie de conduit pour le fluide hydrocarbure depuis l'unité de conditionnement (116a) du premier train de compresseurs (110a) jusqu'à la pompe (150a) du premier train de compresseurs (110a) ; et
- l'ouverture d'une voie de conduit pour le fluide hydrocarbure depuis l'unité de conditionnement (116a) du premier train de compresseurs (110a) jusqu'à la pompe (150b) du deuxième train de compresseurs (110b).

15. Procédé selon la revendication 13, comprenant l'étape suivante :
- la fermeture d'une voie de conduit pour le fluide hydrocarbure depuis l'unité de conditionnement (116b) du deuxième train de compresseurs (110b) jusqu'à la pompe (150b) du deuxième train de compresseurs (110b) ; et
- l'ouverture d'une voie de conduit pour le fluide hydrocarbure depuis l'unité de conditionnement (116b) du deuxième train de compresseurs (110b) jusqu'à la pompe (150a) du premier train de compresseurs (110a).
